# EUROPEAN PATENT APPLICATION

(11) **EP 1 995 748 A1**
(43) Date of publication of application: **26.11.2008**
(21) Application number: 07010098.7
(22) Date of filing: 22.05.2007
(51) Int. Cl.: H01H 11/00, B29C 45/56, B29C 39/42

(54) **Process for manufacturing shaped parts for switching devices in low-voltage, medium-voltage and high-voltage engineering, and a switching device itself**

(71) Applicant: ABB Technology AG, 8050 Zurich (CH)
(72) Inventor: Gentsch, Dietmar, Dr.-Ing., 44879 Bochum (DE); Claus, Oliver, Dr.-Ing., 40885 Ratingen (DE)
(74) Representative: Schmidt, Karl Michael

(57) **Abstract**

The invention relates to a process for manufacturing shaped parts for switching devices in low-voltage, medium-voltage and high-voltage engineering, and to a switching device itself, in accordance with the preamble of patent claims 1, 10 and 11. In order to be able to manufacture the shaped parts in a reliable manner and with adjustable mechanical and electrical properties and strengths, the invention proposes that a mechanical/acoustic oscillation is applied to the liquid casting compounds while the compound is prepared and/or distributed as far as the mold.

## Description

The invention relates to a process for manufacturing shaped parts for switching devices in low-voltage, medium-voltage and high-voltage engineering, and to a switching device itself, in accordance with the preamble of patent claims 1 and 9.

Very high demands are placed on the components in such switching devices. In addition to the required mechanical properties, electrical variables such as insulation resistances etc. need to be taken into consideration at the same time. Switching devices need to be reliable and subject to few faults. In any case, switching devices of this nature need to operate reliably, i.e. they also need to be capable of carrying out an emergency shutdown at any time without any faults. As regards robustness during production, for example, of epoxy resin or rubber-elastic parts and components consisting of other insulating materials, a small number of defective components during production is not entirely avoidable. In order to reduce costs, it is necessary to reduce the proportion of rejects. Furthermore, the product quality can be increased. In this regard, efforts are continuously made aimed at optimizing the production process. Components which have been attached to the vacuum chamber with their fixed and movable connections are cast directly into the bearing housing consisting of epoxy resin. In order in the process to counteract the formation of cracks, the parts are cushioned or are cast together with a filler powder (in the epoxy resin) consisting of powdered quartz or else powdered fused quartz. Furthermore, certain fittings and other attachment parts or inserts consisting of various metallic and nonmetallic materials are cast in epoxy resin with a filler powder. Furthermore, components for increasing the external dielectric strength are cast in silicone or polyurethane or a "soft"-set casting resin without and with a filler powder or a fiber.

In known vacuum circuit breakers, predominantly switching pole parts are used in which the vacuum chamber with its fixed and movable connections is cast directly into the bearing housing consisting of epoxy resin with a filler powder consisting of powdered quartz or else powdered fused quartz.

Furthermore, certain fittings and other inserts consisting of various metallic and nonmetallic materials are cast in epoxy resin with a filler powder (or together with a fiber). Furthermore, components for increasing the external dielectric strength are cast in silicone or polyurethane or a "soft"-set casting resin without and even possibly with a filler powder.

The casting technique means that the vacuum switching chamber or the inserts need to be cushioned prior to being cast in epoxy resin by means of an elastomer material, for mechanical reasons. The requirements for this material are as follows:
- high dielectric strength
- good adhesion or a tight joint to the vacuum switching chamber (or to the insert)
- good adhesion to the surrounding epoxy resin
- sufficient elasticity for absorbing thermomechanical stresses

The purpose of this cushioning is, during manufacture and operation of the epoxy resin components, to absorb stresses in the component which arise owing to thermal contraction. When using silicone or polyurethane or a "soft"-set casting resin without a filler powder, the mechanical strength of the ready-cast components is low, rubber-elastic.

The invention is therefore based on the object of improving a process of the generic type such that the shaped parts can be manufactured in a reliable manner and with adjustable mechanical and electrical properties and strengths.

In a process of the generic type, the object is achieved according to the invention by the characterizing features of claim 1.

Further advantageous configurations are given in dependent claims 2 to 8.

As regards a switching device, the set object is achieved according to the invention by the characterizing features of patent claim 9.

Further advantageous configurations are given in the remaining dependent claims.

The essence of the invention in terms of the process is in this case that while the compound is being prepared and/or distributed as far as the mold, a mechanical/acoustic oscillation is applied to the liquid casting compounds. As a result, the viscosity of the compound is reduced and the miscibility and therefore the coverage of the fillers which may be provided are improved.

In an advantageous configuration, the frequency of the oscillation is adjustable. It is therefore possible to adjust the desired properties during casting and to be able to match them optimally to the respective material and the material density.

A particularly advantageous configuration specifies that the oscillation produced is in the ultrasound range.

A particular configuration specifies that, particularly in the region of the injection nozzle (i.e. upstream of the casting mold) a frequency unit is located and/or is arranged in the mold itself, via which frequency unit sound is applied during casting.

This process makes it possible to achieve even a higher density of the material in addition to improved flowability of the compound. The improved coverage of the filler which may be provided by means of plastic also increases the mechanical characteristics of the corresponding mixture to a considerable extent and also the impact strength of the cured casting compound.

The process is optimized to the extent that, during casting, the plastic compound is cast under the influence of high-sound or ultrasound excitation with a relatively low viscosity. Cavities which may be present can be filled (recesses) and air bubbles are removed from the compound using this process.

For this purpose, a casting mold configured as claimed in claims 9 and 10 is also provided.

Essentially two types of materials and the way in which they are handled are compared.

### Thermosetting plastic material/casting resin:

- The ceramic isolator of a vacuum switching chamber and the cast epoxy resin have markedly different coefficients of thermal expansion, however, which results in mechanical contraction stresses remaining even when using a compensating layer in the component, i.e. the epoxy resin envelope, given corresponding thermal alternating stress. Moreover, the manufacturing process is matched to the casting resin material.
- In order to avoid possible initiation of cracks, it is provided in a known manner that a so-called damping layer or a compensating layer is introduced between the vacuum chamber surface and the epoxy resin envelope so as to compensate for these different coefficients of thermal expansion.
- For this purpose, elastomers such as rubber or hard rubber materials are usually used which are in the form of collars or have been previously cast on and are applied over the vacuum switching chambers before the latter are introduced into a corresponding casting mold and cast with epoxy resin (usually with a filler). Said compensating layer is in this case cast into the composite produced.
- This production process results in a functional success, namely that cracking of the epoxy resin sheathing after casting or given an alternating temperature stress is avoided, but there is space for optimization in the process for reducing rejects and for improving the mechanical characteristics of the cured material.

### Rubber-elastic material:

- By casting a rubber-elastic material around a vacuum switching chamber the manufacturing process is matched to the corresponding material. The manufacturing times (cycle time) of each component, for example produced in the hand-casting, vacuum-casting or low-pressure processes, are adjusted correspondingly until the component is cured and it is removed.

Overall, the advantages consist in the fact that the mechanical properties of the plastics materials are improved under the influence of sound frequency energy and the surface quality of the component can be optimized and the rejects during continuous production can be reduced.

Owing to the improved flowability with the process according to the invention, both can now be used advantageously.

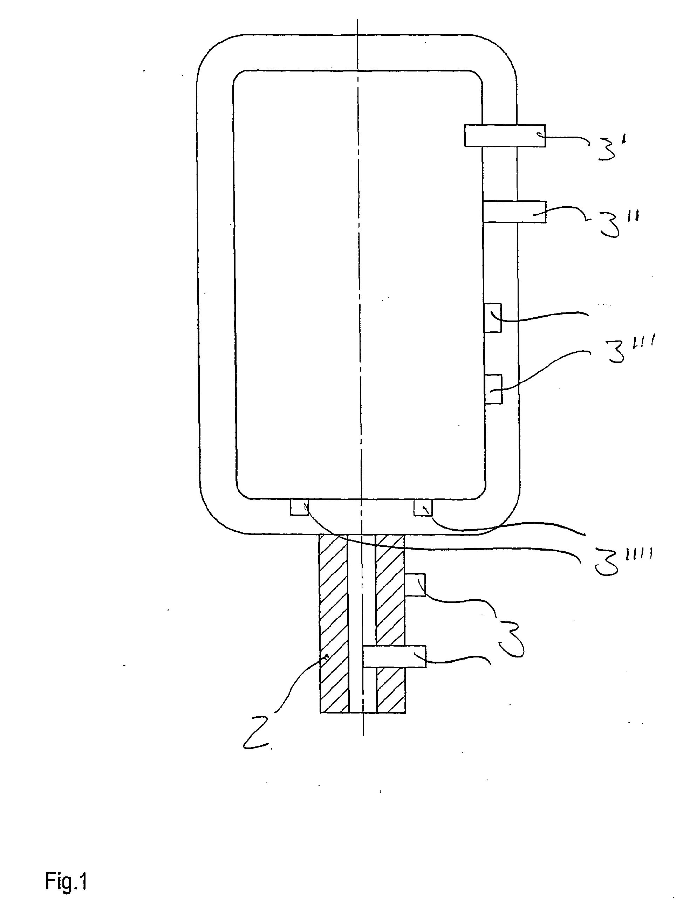

The drawing shows an exemplary configuration in which a casting mold 1 is provided with ultrasound generators 3, 3', 3'', 3''', 3'''' in the inlet region 2 and in the mold itself. These ultrasound generators can firstly apply the ultrasound energy already described above to the casting compound as early as at the inlet to the mold, with the result that the viscosity can be changed there in adjustable fashion.

Furthermore, ultrasound generators 3', 3'', 3''', 3'''' are also placed in the region of action of the mold itself, with the result that the viscosity and also the solidification and/or curing response can be influenced there as well. The representation of the various ultrasound generators shows the various installation positions and positions of action of the introduced ultrasound energy. The ultrasound generators 3' and 3" can therefore be arranged from the outside so as to reach through the boundary limit of the casting mold 1. Ultrasound generators 3''' can also be integrated in the casting mold or in the wall of the casting mold, i.e. either at the side, as shown by item number 3''', or at the bottom, as indicated by item number 3''''.

In all examples the important factor is reliable injection of ultrasound energy during the casting process.

### List of reference symbols

- 1: casting mold
- 2: inlet region
- 3: ultrasound generator
- 3', 3'', 3''', 3'''': ultrasound generators with different installation positions

## Claims

1. A process for manufacturing shaped parts for switching devices in low-voltage, medium-voltage and high-voltage engineering,
**wherein**
while the compound is being prepared and/or distributed as far as the mold, a mechanical/acoustic oscillation is applied to the liquid casting compounds.

2. The process as claimed in claim 1,
**wherein**
the frequency of the oscillation is adjustable.

3. The process as claimed in claim 1 or 2,
**wherein**
the oscillation produced is in the ultrasound range.

4. The process as claimed in claim 1, 2 or 3,
**wherein**
the oscillation energy is fed in in the region of the injection nozzle, i.e, upstream of the casting mold, and/or directly into the casting mold.

5. The process as claimed in one of the preceding claims,
**wherein**
oscillation energy is applied to the mixture volume even before the mixture is introduced into the casting mold.

6. The process as claimed in one of the preceding claims,
**wherein**
sound energy is applied even to the delivery pipes of the casting compound.

7. The process as claimed in one of the preceding claims,
**wherein**
thermosetting plastics are cast in this way.

8. The process as claimed in one of the preceding claims,
**wherein**
rubber-elastic plastics are cast in this way.

9. A casting mold for a switching device manufactured as claimed in claims 1 to 8,
**wherein**
at least one ultrasound generator (3, 3', 3'', 3''', 3'''') is arranged on and/or in the casting mold.

10. The casting mold as claimed in claim 9,
**wherein**
at least one ultrasound generator (3) is also arranged in the inlet region (2) of the casting mold (1).

11. A switching device for low-voltage, medium-voltage and high-voltage switchgear assemblies,
**wherein**
at least some of the components of a switching device are manufactured in accordance with the process as claimed in one of the preceding claims 1 to 8.

12. The switching device as claimed in claim 10,
**wherein**
the switching device contains cast-in pole parts, which are manufactured in accordance with a process as claimed in one of claims 1 to 8.
